# EUROPÄISCHE PATENTSCHRIFT

(11) **EP 1 122 512 B1**
(45) Veröffentlichungstag und Bekanntmachung des Hinweises auf die Patenterteilung: **26.11.2003**
(21) Anmeldenummer: 00102017.1
(22) Anmeldetag: 02.02.2000
(51) Int. Cl.: G01C 9/24

(54) **Winkel-Wasserwaage**
Angle measuring spirit level
Niveau à bulle à mesure d angle

(43) Veröffentlichungstag der Anmeldung: 08.08.2001
(73) Patentinhaber: RIWA TEC GmbH, Messgeräte Handelsgesellschaft, 76831 Birkweiler/Pfalz (DE)
(72) Erfinder: Blatt,Hans-Peter, 76833 Frankweiler (DE)
(74) Vertreter: Ratzel, Gerhard, Dr.

(56) Entgegenhaltungen:
- WO-A-88/04405
- DE-A- 3 413 449
- DE-A- 19 535 692
- US-A- 5 421 094

## Beschreibung

Die Erfindung betrifft eine Wasserwaage mit einem Grundkörper und einer mit diesem verbundenen Libelle, die in ihrer Neigung um eine Achse gegenüber dem Grundkörper verdrehbar ist.

Wie bekannt ist, werden Wasserwaagen verwandt, um zu überprüfen, ob ein Gegenstand bzw. eine Ober- oder Seitenfläche eines Gegenstandes genau horizontal oder genau vertikal ausgerichtet ist. Hierzu wird der Grundkörper der Wasserwaage an die entsprechend zu überprüfende Ober- oder Seitenfläche des auszurichtenden Gegenstandes gehalten. Mit einer Luftblase in der mit Flüssigkeit gefüllten Libelle wird dann entsprechend überprüft, ob diese die gewünschte Ausrichtung hat.

Problematisch ist in diesem Zusammenhang, wenn nicht genau horizontale oder vertikale Richtungen zu überprüfen sind, also solche mit einer gewissen Neigung. Hierzu ist es bekannt, die Libelle in ihrer Neigung um eine Achse verdrehbar gegenüber dem Grundkörper der Wasserwaage auszugestalten. Man kann dann davon ausgehen, dass der gemessene Winkel korrekt ist, wenn bei an den Gegenstand angelegter Wasserwaage die Luftblase in der um einen Winkel verstellten Libelle in dem Bereich ist, der eine korrekte Lage anzeigt.

Es hat sich jetzt aber herausgestellt, dass es bei derartigen bekannten Wasserwaagen mit in ihrer Neigung verdrehbaren Libellen zu Ungenauigkeiten kommen kann. Um eine exakte Winkelmessung zu erreichen, muss nämlich der Grundkörper der Wasserwaage exakt entlang einer Falllinie angelegt werden.

Wenn der Wasserwaagenkörper von dieser Falllinie abweicht, hat dies eine entsprechende Missweisung der in ihrer Neigung verdrehbaren Libelle zur Folge.

Zum nächstkommenden Stand der Technik ist auf DE 195 35 692 A1 hinzuweisen. Dieses Dokument beschreibt einen Winkelmesser zum Ausrichten von Werkstücken in Spannmittel, insbesondere auf Werkzeugmaschinen, wie z.B. Fräs-, Hobel-, Bohr- o. dgl. Maschinen mit einer verstellbaren Winkelskala, dadurch gekennzeichnet, dass mit der Winkelskala eine auf die ebene Grundfläche des Grundkörpers justierte Libelle in Wirkverbindung steht.

Wie bereits oben ausgeführt wurde, sind Wasserwaagen mit in ihrer Neigung verdrehbaren Libellen häufig mit dem Nachteil behaftet, Missweisungen zu beinhalten.

Aufgabe der vorliegenden Erfindung ist es daher, eine Wasserwaage des oben beschriebenen Standes der Technik derart weiterzubilden, dass eine solche Missweisung nicht auftritt. Dabei soll die Bedienung der Wasserwaage nach wie vor einfach und betriebssicher sein.

Diese Aufgabe wird erfindungsgemäß dadurch gelöst, dass bei einer Wasserwaage der eingangs genannten Gattung dadurch gekennzeichnet ist, dass eine fest am Grundkörper sitzende Justage-Libelle vorgesehen ist, deren Mittelstellung parallel zur Achse ausgerichtet ist, wobei der Grundkörper einen L-förmigen Querschnitt aufweist und die Justage-Libelle auf einem Schenkel des Grundkörpers sitzt, der mit 90° gegenüber dem die verdrehbare Libelle aufnehmenden Schenkel des Grundkörpers abgewinkelt ist.

Der Erfindung liegt dabei die Erkenntnis zu Grunde, dass mit einer derartigen Justage-Libelle sicherzustellen ist, dass die Wasserwaage exakt entlang der gewünschten Fallinie auszurichten ist, so dass Missweisungen bei der verstellbaren Libelle auszuschließen sind.

Außerdem ist bei einer derartigen Justage-Libelle sichergestellt, dass ein Benutzer der Wasserwaage ihre Funktion und Wirkungsweise schnell erkennt und sie somit einfach in sein Handeln einbeziehen kann. Die Justage-Libelle ist genau senkrecht zur Falllinie ausgerichtet in Horizontalrichtung. Damit ist auch die Achse, um die die Libelle gegenüber dem Grundkörper verdrehbar ist, in Horizontalrichtung ausgerichtet senkrecht zur Falllinie und damit ist die Ebene, in der die Libelle verdrehbar ist, eine exakte Vertikalebene, in der die oben angesprochene Missweisung nicht auftritt.

Bei einer bevorzugten Ausführungsform ist der Grundkörper der Wasserwaage mit einem im wesentlichen L-förmigen Querschnitt versehen, wobei die Justage-Libelle auf einem Schenkel des Grundkörpers sitzt, der mit 90° abgewinkelt ist gegenüber dem die verdrehbare Libelle aufnehmenden Schenkel des Grundkörpers. Auf diese Weise kann die Justage-Libelle eine ausreichende Größe haben und kann schnell abgelesen werden.

Es wird vorgeschlagen, die gegenüber dem Grundkörper verdrehbare Libelle in eine zylindrische Dose einzusetzen, deren Mittelachse mit der Achse übereinstimmt, um die die Libelle in ihrer Neigung verdrehbar ist. Damit kann über diese Dose die Lagerung der Libelle im Grundkörper erfolgen, was eine einfache Montage nach sich zieht.

Vorteilhafterweise kann über die Dose ein Skalenring an der Wasserwaage fixierbar sein, so dass eine exakte Voreinstellung für die Libelle möglich ist. Dieser Skalenring kann außer einer Gradeinteilung auch eine Einteilung aufweisen für eine prozentuale Neigungsangabe.

Das Abdeckteil weist vorteilhafterweise auch eine seitliche Ausbuchtung auf, in der der Rand des Skalenrings zugänglich ist, so dass hierüber die Voreinstellung der Libelle erfolgen kann. Dabei können im Abdeckteil außerdem noch Sichtfenster vorgesehen sein, um eine auf dem Skalenring aufgebrachte Markierung entsprechend erkennen zu können.

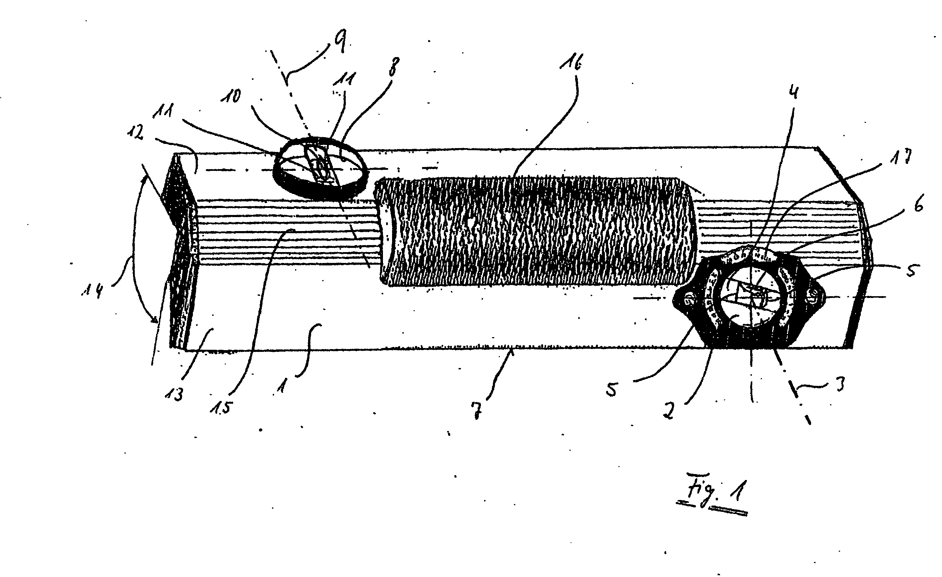

Weitere Vorteile und Merkmale der Erfindung ergeben sich aus der nachfolgenden Beschreibung eines Ausführungsbeispiels. Dabei zeigt Figur 1 die perspektivische Ansicht einer erfindungsgemäßen Wasserwaage;

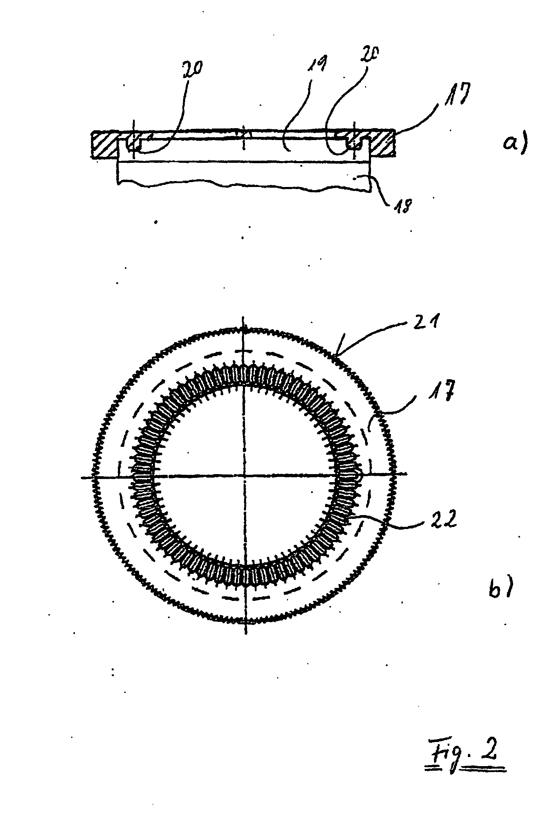

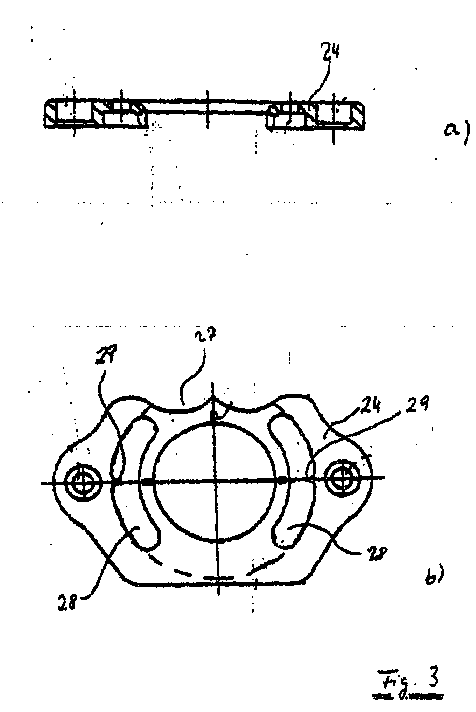

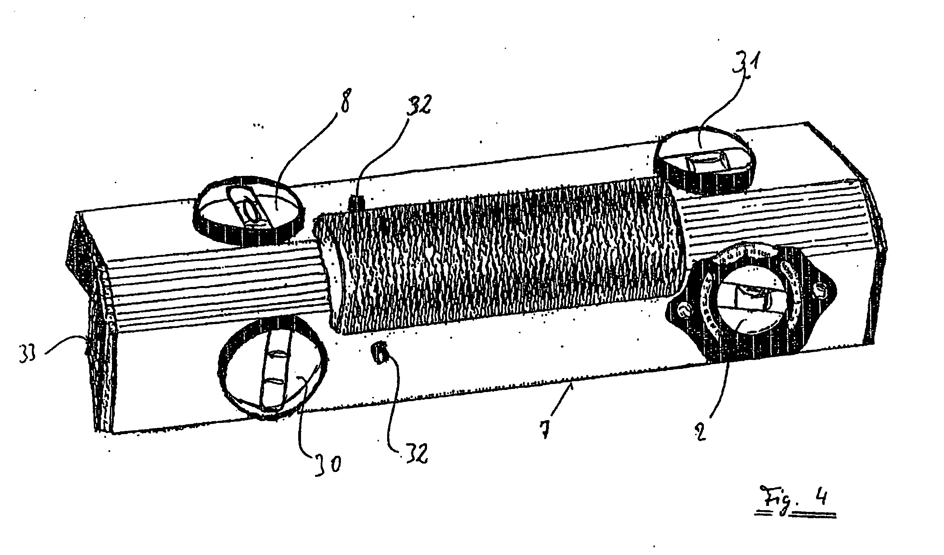

Figur 2 den Skalenring für die verstellbare Libelle und Figur 3 das Abdeckteil, mit dem der Skalenring gemäß Figur 2 an der Wasserwaage gemäß Figur 1 zu befestigen ist; Figur 4 zeigt eine weitere Ausführungsform der erfindungsgemäßen Wasserwaage mit weiteren Libellen.

In der Figur 1 erkennt man eine erfindungsgemäße Wasserwaage. Sie weist einen Grundkörper 1 auf, der als Aluminium-Strangpressprofil hergestellt ist, an dessen Enden Plastikkappen aufgesetzt sind. In diesen Grundkörper 1 ist eine Libelle 2 eingesetzt, die in ihrer Neigung um eine Achse 3 gegenüber dem Grundkörper verdrehbar ist. In dieser Libelle ist in bekannter Weise ein Glasröhrchen 4 vorgesehen, das mit Flüssigkeit gefüllt ist und mit zwei Markierungen 5 versehen ist. Zwischen diese um das Glasröhrchen umlaufenden Markierungen kommt ein Luftbläschen 6 zu liegen, wenn das Glasröhrchen 4 exakt horizontal ausgerichtet ist.

Bei einer verdrehten Libelle 2 kommt das Luftbläschen 6 also zwischen die Markierungen 5 zu liegen, wenn die Unterseite 7 des Grundkörpers 1 der Wasserwaage die Neigung hat, auf die die Libelle vorher eingerichtet wurde. Hierbei ist aber zu berücksichtigen, dass die Unterseite 7 entlang der Falllinie laufen muss, da sonst ein Mess- oder Anzeigefehler bei der Libelle 2 auftritt, die nur dann absolut exakt anzeigt, wenn sie in einer Vertikalebene angeordnet ist. Um dies sicherzustellen, weist die erfindungsgemäße Wasserwaage eine Justage-Libelle 8 auf, die fest am Grundkörper 1 befestigt ist und deren Mittelstellung bzw. Nullachse 9 parallel zur Achse 3 ist, um die die Libelle 2 verdrehbar ist.

Wenn bei der Justage-Libelle 8 das entsprechende Luftbläschen zwischen den beiden Markierungen 11 dieser Libelle liegt, ist die Nullachse 9 der Justage-Libelle exakt horizontal ausgerichtet.

Damit ist auch die parallel zu dieser Nullachse liegende Achse 3 genau horizontal ausgerichtet und damit ist die Libelle 2 genau in einer Vertikalebene ausgerichtet und gibt so die eingestellte Neigung ohne Messfehler wieder.

Der in der Figur 1 dargestellte Grundkörper hat einen im wesentlichen L-förmigen Querschnitt mit zwei Schenkeln 12, 13, die um einen Winkel 14 von 90° gegeneinander abgewinkelt sind. Dabei sitzt die Justage-Libelle in dem einen Schenkel 12, während die verdrehbare Libelle 2 in dem anderen Schenkel 13 sitz6t. So kann die Justage-Libelle 8 beliebig groß ausgeführt werden und ist gut ablesbar.

Im hier dargestellten Beispiel ist der Grundkörper an der Außenkante, an der die beiden Schenkel zusammenstoßen, abgeschrägt und auf dieser Abschrägung 15 ist ein Kunststoffhandgriff 16 montiert, der die Handhabung der Wasserwaage erleichtert.

Die verdrehbare Libelle 2 sitzt in einer zylindrischen Dose, deren Mittelachse mit der Drehachse 3 übereinstimmt. Auf diese Dose ist ein Skalenring 17 aufgesetzt, wie er in der Figur 2 genauer gezeigt ist. Die Dose 18 weist eine klare Abschlussscheibe 19 auf, unter der das Glasröhrchen 4 von außen zu erkennen ist. Die Abschlussscheibe 19 weist dabei zwei Löcher auf, in die der Skalenring 17 mit zwei Nocken 20 eingreift, so dass eine verdrehfeste Fixierung zwischen Skalenring 17 und Dose 18 zu erreichen ist. Im übrigen ist der Skalenring 17 mit einem umlaufenden Bord versehen, innerhalb derer die Außenseite der Dose 18 liegt.

Wie in der Figur 2b zu erkennen ist, weist der Skalenring 17 außen eine Riffelung 21 auf, über die er gedreht werden kann, wobei dabei die Dose 18 über die Nocken 20 mitverdreht wird.

Das Abdeckteil 24 weist eine seitliche Ausbuchtung 27 auf, in der der Skalenring 17 mit seiner Riffelung 21 zugänglich und somit leicht verdrehbar ist.

Des weiteren erkennt man in der Figur 3, dass das Abdeckteil 24 zwei Sichtfenster 28 integriert hat, in der auf dem Skalenring 17 aufgebrachte Markierungen zu liegen kommen. Mittig in diesen Sichtfenstern 28 sind dabei noch Spitzen 29 vorhanden als Zeiger über diesen Markierungen auf dem Skalenring. Der Skalenring kann bei außer einer Einteilung mit Grad auch eine Einteilung mit Neigungsprozenten aufweisen.

In der Figur 4 erkennt man noch eine weitere Ausführungsform einer erfindungsgemäßen Wasserwaage, bei der neben einer verdrehbaren Libelle 2 und einer Justage-Libelle 8 noch zwei Zusatzlibellen 30, 31 vorhanden sind. Wenn die verdrehbare Libelle 2 in ihrer Grundstellung parallel zur Unterseite 7 ist, lassen sich mit einer derartigen Wasserwaage in bekannter Weise schnell Justierungen in mehreren Ebenen durchführen.

Es sei hier auch noch erwähnt, dass in der Figur 4 zwei Fixierschrauben 32 dargestellt sind, über die in der Kehle 33 angeordnete Flach- bzw. Topfmagnete gehalten werden, so dass die Wasserwaage mit dieser Kehle leicht auf ein Eisenrohr etc. aufsetzbar ist und an diesem über die Magnete fixierbar ist.

## Patentansprüche

1. Wasserwaage mit einem Grundkörper (1) und einer mit diesem verbundenen Libelle (2), die in ihrer Neigung um eine Achse (3) gegenüber dem Grundkörper (1) verdrehbar ist,
**dadurch gekennzeichnet,**
**dass** eine fest am Grundkörper sitzende Justage-Libelle (8) vorgesehen ist, deren Mittelstellung parallel zur Achse (3) ausgerichtet ist, wobei der Grundkörper (1) einen L-förmigen Querschnitt aufweist und die Justage-Libelle (8) auf einem Schenkel (12) des Grundkörpers (1) sitzt, der mit 90° gegenüber dem die verdrehbare Libelle (2) aufnehmenden auderen Schenkel (13) des Grundkörpers (1) abgewinkelt ist.

2. Wasserwaage nach Anspruch 1,
**dadurch gekennzeichnet,**
**dass** über die Dose (18) ein Skalenring (17) an der Wasserwaage fixierbar ist.

3. Wasserwaage nach einem der Ansprüche 1 bis 2,
**dadurch gekennzeichnet,**
**dass** das Abdeckteil (24) eine seitliche Ausbuchtung (27) aufweist, in der der Rand des Skalenrings (17) zugänglich ist.

4. Wasserwaage nach einem der Ansprüche 1 bis 3,
**dadurch gekennzeichnet,**
**dass** das Abdeckteil (24) wenigstens ein Sichtfenster (28) für eine auf dem Skalenring (17) aufgebrachte Markierung aufweist.

## Claims

1. Water level consisting of a basic element (1) and a spirit level (2) connected to this element, which can change its angle of indination with relation to the basic element (1) by being rotated around its axis (3),
**characterised in that**
an adjusting spirit level (8) is fixed to the basic element. The intermediate position of this adjusting level is aligned parallel to the axis (3). The profile of the basic element (1) is L-shaped and the adjusting spirit level (8) is positioned on one leg (12) of the basic element (1). This leg is positioned at a 90 degree angle to the other leg (13) of the basic element (1) on which the rotatable spirit level (2) is positioned.

2. Water level according to claim 1,
**characterised in that**
a graduated collar (17) is fixed onto the water level above the box (18).

3. Water level according to claim 1- 2,
**characterised in that**
the cover (24) has a lateral recessed grip (27) which allows access to the rim of the graduated collar (17).

4. Water level according to claim 1- 3,
**characterised in that**
the cover (24) Is equipped with at least one window (28), which is sufficiently large to show the marking of the graduated collar (17).

## Revendications

1. Niveau à bulle d'air avec un élément de base (1) et une nivelle (2) jointe à ce corps dont on peut modifier l'inclinaison autour d'un axe par rapport au corps de base (1),
**caractérisé en ce qu'**une nivelle de précision (8) est fixée sur l'élément de base dont la position intermédiaire est parallèle à l'axe (3). Le diamètre du corps de base (1) a la forme d'un L et la nivelle de précision (8) se trouve sur un côté (12) de l'élément de base (1) qui forme un angle de 90° avec l'autre côté (13) de l'élément de base (1) sur lequel se trouve la nivelle inclinable (2).

2. Niveau à bulle selon la revendication 1,
**caractérisé en ce que**
au-dessus de la boîte (18) un anneau gradué (17) peut être fixé sur le niveau à bulle.

3. Niveau à bulle selon la revendication 1 - 2,
**caractérisé en ce que**
le couvercle (24) dispose d'une rainure latérale (27) permettant d'accéder au rebord de l'anneau gradué (17).

4. Niveau à bulle selon la revendication 1 - 3,
**caractérisé en ce que**
le couvercle (24) a au moins une fenêtre de contrôle (28) pour le repère appliqué sur l'anneau gradué (17).
